# EUROPEAN PATENT APPLICATION

(11) **EP 4 321 814 A1**
(43) Date of publication of application: **14.02.2024**
(21) Application number: 22803625.7
(22) Date of filing: 23.03.2022
(51) Int. Cl.: F24F 11/62, F25B 49/02

(54) **AIR CONDITIONER HEATING START-UP CONTROL METHOD AND DEVICE, AIR CONDITIONER, AND STORAGE MEDIUM**

(30) Priority: 18.05.2021 CN 202110538995
(71) Applicant: Midea Group Co., Ltd., Foshan, Guangdong 528311 (CN); GD Midea Air-Conditioning Equipment Co., Ltd., Foshan, Guangdong 528311 (CN)
(72) Inventor: YOU, Shaolei, Foshan, Guangdong 528311 (CN); HOU, Zefei, Foshan, Guangdong 528311 (CN)
(74) Representative: Whitlock, Holly Elizabeth Ann
(86) International application number: PCT/CN2022/082395
(87) International publication number: WO 2022/242296

(57) **Abstract**

An air conditioner heating start-up control method, comprising: receiving a heating start-up instruction, and obtaining a drop height between an indoor unit and an outdoor unit and the length of a connection pipe between the indoor unit and the outdoor unit; and determining a corresponding heating start-up policy according to the drop height and the length of the connection pipe, and controlling a running state of a compressor according to the heating start-up policy to complete air conditioner heating start-up. Also provided are an air conditioner heating start-up control device, an air conditioner, and a storage medium. The low pressure during heating start-up is improved, and the service life of a compressor is prolonged.

## Description

### CROSS-REFERENCE TO RELATED APPLICATION

This application claims priority to Chinese Patent Application No. 202110538995.7 filed on May 18, 2021, the entire contents of which are incorporated herein by reference in its entirety.

### TECHNICAL FIELD

The present application relates to the technical field of air conditioners, and in particular relates to an air-conditioning heating startup control method, an air-conditioning heating startup control device, an air conditioner and a storage medium.

### BACKGROUND

At present, a heating startup method of the inverter air conditioner is the same under any outdoor ambient temperature and installation conditions, the compressors all raise the frequency to a certain platform frequency at the same rate, and continue to raise the frequency to the next platform frequency after maintaining the platform frequency for a period of time.

However, because the longer the connecting pipe of the air conditioner and the larger the drop, the lower the low pressure when heating starts up, which will not only affect the service life of the compressor, but also cause low-pressure protect shutdown phenomenon when the connecting pipe is too long or the drop is too large, affecting the normal use of customers.

The above content is only used to assist in understanding the technical solutions of the present application and does not represent an admission that the above content is prior art.

### SUMMARY

The main purpose of the present application is to propose an air-conditioning heating startup control method, an air-conditioning heating startup control device, an air conditioner and a storage medium, aiming to solve the technical problem in the prior art that the air-conditioning heating startup method may affect the service life of the compressor.

In order to achieve the above purpose, the present application provides an air-conditioning heating startup control method, including the following steps:
in response to receiving a heating startup command, obtaining a drop height between an indoor unit and an outdoor unit and a length of a connecting pipe between the indoor unit and the outdoor unit; and
determining a corresponding heating startup strategy according to the drop height and the length of the connecting pipe, and controlling an operating state of a compressor according to the heating startup strategy to complete an air-conditioning heating startup.

In one embodiment, the determining the corresponding heating startup strategy according to the drop height and the length of the connecting pipe, and controlling the operating state of the compressor according to the heating startup strategy to complete the air-conditioning heating startup includes:
comparing the drop height with a first preset height threshold to obtain a first comparison result;
comparing the length of the connecting pipe with a first preset length threshold to obtain a second comparison result; and
determining the corresponding heating startup strategy according to the first comparison result and the second comparison result, and controlling the operating state of the compressor according to the heating startup strategy to complete the air-conditioning heating startup.

In one embodiment, the determining the corresponding heating startup strategy according to the first comparison result and the second comparison result, and controlling the operating state of the compressor according to the heating startup strategy to complete the air-conditioning heating startup includes:
in response to the drop height being greater than or equal to the first preset height threshold, or the length of the connecting pipe being greater than or equal to the first preset length threshold, controlling the compressor to raise a frequency to a first preset frequency at a first preset rate and operate at the first preset frequency for a first preset duration;
controlling the compressor to raise the frequency to a second preset frequency at a second preset rate and operate at the second preset frequency for a second preset duration, the second preset frequency being greater than the first preset frequency; and
controlling an air conditioner to enter a normal operation state to complete the air-conditioning heating startup.

In one embodiment, the determining the corresponding heating startup strategy according to the first comparison result and the second comparison result, and controlling the operating state of the compressor according to the heating startup strategy to complete the air-conditioning heating startup includes:
in response to the drop height being less than the first preset height threshold, and the length of the connecting pipe being less than the first preset length threshold, obtaining an outdoor ambient temperature;
in response to the drop height being greater than a second preset height threshold, or the length of the connecting pipe being greater than a second preset length threshold, and the outdoor ambient temperature being lower than a first preset temperature threshold, controlling the compressor to raise a frequency to a first preset frequency at a first preset rate and operate at the first preset frequency for a first preset duration, wherein the second preset height threshold is less than the first preset height threshold, and the second preset length threshold is less than the first preset length threshold;
controlling the compressor to raise the frequency to a second preset frequency at a second preset rate and operate at the second preset frequency for a second preset duration; and
controlling an air conditioner to enter a normal operation state to complete the air-conditioning heating startup.

In one embodiment, after the obtaining the outdoor ambient temperature, the method further includes:
in response to the drop height being less than or equal to the second preset height threshold, and the length of the connecting pipe being less than or equal to the second preset length threshold, comparing the outdoor ambient temperature with a second preset temperature threshold, the second preset temperature threshold being less than the first preset temperature threshold;
in response to the outdoor ambient temperature being less than the second preset temperature threshold, controlling the compressor to raise the frequency to the first preset frequency at the first preset rate and operate at the first preset frequency for the first preset duration;
controlling the compressor to raise the frequency to the second preset frequency at the second preset rate and operate at the second preset frequency for the second preset duration; and
controlling the air conditioner to enter the normal operation state to complete the air-conditioning heating startup.

In one embodiment, after the comparing the outdoor ambient temperature with the second preset temperature threshold, the method further includes:
in response to the outdoor ambient temperature being greater than or equal to the second preset temperature threshold, controlling the compressor to raise the frequency to a third preset frequency at a third preset rate and operate at the third preset frequency for a third preset duration, the third preset rate is greater than the first preset rate, the third preset frequency is greater than the first preset frequency, and the third preset duration is less than the first preset duration;
controlling the compressor to raise the frequency to a fourth preset frequency at a fourth preset rate and operate at the fourth preset frequency for a fourth preset duration, wherein the fourth preset rate is greater than the second preset rate, the fourth preset frequency is greater than the second preset frequency, the fourth preset frequency is greater than the third preset frequency, and the fourth preset duration is less than the second preset duration; and
controlling the air conditioner to enter the normal operation state to complete the air-conditioning heating startup.

In one embodiment, the receiving the heating startup command, obtaining the drop height between the indoor unit and the outdoor unit and the length of the connecting pipe between the indoor unit and the outdoor unit includes:
receiving the heating startup command, obtaining installation record information of an air conditioner;
extracting indoor unit information, outdoor unit information and connection pipe information from the installation record information; and
determining the drop height between the indoor unit and the outdoor unit according to the indoor unit information and the outdoor unit information, and determining the length of the connecting pipe between the indoor unit and the outdoor unit according to the connecting pipe information.

In addition, in order to achieve the above purpose, the present application also provides an air-conditioning heating startup control device, including:
an information acquisition module configured to receive a heating startup command, obtain a drop height between an indoor unit and an outdoor unit and a length of a connecting pipe between the indoor unit and the outdoor unit; and
a state control module configured to determine a corresponding heating startup strategy according to the drop height and the length of the connecting pipe and control an operating state of a compressor according to the heating startup strategy to complete an air-conditioning heating startup.

In addition, in order to achieve the above purpose, the present application also provides an air conditioner, including: a memory, a processor, and an air-conditioning heating startup control program stored in the memory and executable on the processor, the air-conditioning heating startup control method as described above is implemented when the air-conditioning heating startup control program is executed by the processor.

In addition, in order to achieve the above purpose, the present application also provides a storage medium, the storage medium stores an air-conditioning heating startup control program, the air-conditioning heating startup control method as described above is implemented when the air-conditioning heating startup control program is executed by a processor.

The present application provides an air-conditioning heating startup control method, including: when receiving a heating startup command, obtaining a drop height between an indoor unit and an outdoor unit and a length of a connecting pipe between the indoor unit and the outdoor unit; determining a corresponding heating startup strategy according to the drop height and the length of the connecting pipe, and controlling an operating state of a compressor according to the heating startup strategy to complete an air-conditioning heating startup. The solution of the present application is different from the situation that the traditional air conditioner heating startup method is consistent under any conditions, during the heating startup process, the appropriate heating startup strategy is determined based on the drop height and the length of the connecting pipe to perform heating startup, which improves the low-pressure pressure when heating starts up and prolongs the service life of the compressor.

### BRIEF DESCRIPTION OF THE DRAWINGS

FIG. 1 is a structural schematic view of an air conditioner of a hardware operation environment according to an embodiment of the present application.
FIG. 2 is a process schematic view of an air-conditioning heating startup control method according to a first embodiment of the present application.
FIG. 3 is a process schematic view of an air-conditioning heating startup control method according to a second embodiment of the present application.
FIG. 4 is a process schematic view of an air-conditioning heating startup control method according to a third embodiment of the present application.
FIG. 5 is a logic control view of an embodiment of an air-conditioning heating startup control method according to the present application.
FIG. 6 is a schematic view of functional modules of a first embodiment of an air-conditioning heating startup control device according to the present application.

The realization of the purpose, functional characteristics and advantages of the present application will be further described with reference to the accompanying drawings in conjunction with the embodiments.

### DETAILED DESCRIPTION OF THE EMBODIMENTS

It should be understood that the specific embodiments described herein are only used to explain the present application, and are not intended to limit the present application.

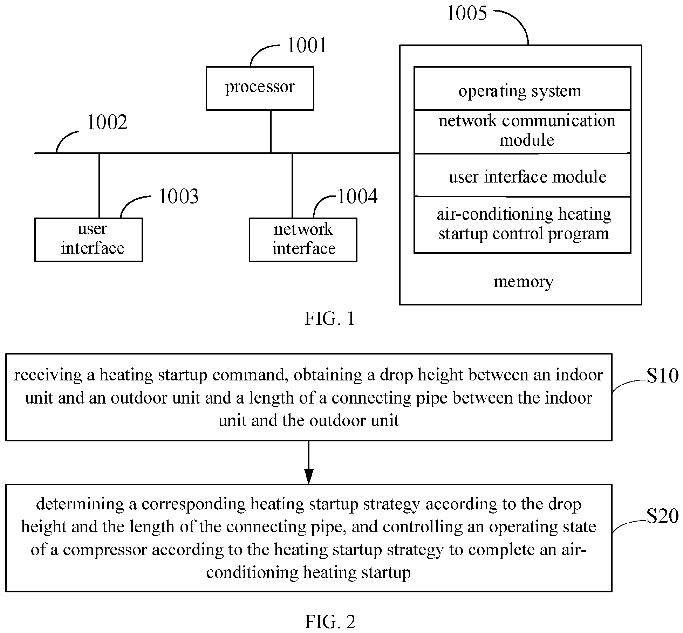

Referring to FIG. 1, FIG. 1 is a structural schematic view of an air conditioner of a hardware operation environment according to an embodiment of the present application.

As shown in FIG. 1, the air conditioner may include: a processor 1001, such as a central processing unit (CPU), a communication bus 1002, a user interface 1003, a network interface 1004 and a memory 100. The communication bus 1002 is configured to achieve connection communication among these components. The user interface 1003 may include a display and an input unit such as a button, and the user interface 1003 may also include a standard wired interface and a wireless interface. The network interface 1004 may also include a standard wired interface or a wireless interface (such as a WI-FI interface). The memory 1005 may be a high-speed random access memory (RAM) or a stable memory (non-volatile memory), such as a disk memory. The memory 1005 may also be a storage device independent of the aforementioned processor 1001.

Those skilled in the art can understand that the equipment structure shown in FIG. 1 does not constitute a limitation to the air conditioner, and may include more or less components than shown in the figure, or a combination of certain components, or differently arranged components.

As shown in FIG. 1, a memory 1005 as a storage medium may include an operating system, a network communication module, a user interface module and an air-conditioning heating startup control program.

In the air conditioner shown in FIG. 1, the network interface 1004 is mainly configured to connect to an external network and perform data communication with other network devices; the user interface 1003 is mainly configured to connect to user equipment and perform data communication with the user equipment; the device of the present application calls the air-conditioning heating startup control program stored in the memory 1005 through the processor 1001, and executes the air-conditioning heating startup control method provided by the embodiment according to the present application.

Based on the above hardware structure, an embodiment of an air-conditioning heating startup control method according to the present application is proposed.

Referring to FIG. 2, FIG. 2 is a process schematic view of the air-conditioning heating startup control method according to a first embodiment of the present application.

In the first embodiment, the air-conditioning heating startup control method includes the following steps:
step S10, receiving a heating startup command, obtaining a drop height between an indoor unit and an outdoor unit and a length of a connecting pipe between the indoor unit and the outdoor unit.

It should be noted that an execution subject of the embodiment can be an air conditioner, such as a cabinet air conditioner or a hanging air conditioner, other types of air conditioners are also available, which are not limited in this embodiment. In this embodiment, an air conditioner is taken as an example to illustrate.

It should be understood that the air conditioner in the embodiment may specifically be an inverter air conditioner, and the compressor may specifically be an inverter compressor, and this embodiment does not limit the specific models of the inverter air conditioner and the inverter compressor. The heating startup command in this embodiment can be input by the user through the buttons on the remote control of the air conditioner, can also be input by the user through voice, or can be input by other methods, which is not limited in this embodiment.

It should be noted that the air conditioner includes an indoor unit and an outdoor unit, the indoor unit is installed indoors, and the outdoor unit is installed outdoors. Generally speaking, for the normal operation of the air conditioner, there will be a certain height difference between the installation position of the indoor unit and the installation position of the outdoor unit.

It should be understood that the drop height in the embodiment refers to the vertical height difference between the indoor unit and the outdoor unit of the air conditioner. Since the indoor unit and the outdoor unit of the air conditioner can be connected through the connecting pipe, the refrigerant flows between the indoor unit and the outdoor unit through the connecting pipe to form a refrigeration cycle or a heating cycle to achieve a cooling or heating effect. Moreover, the connecting pipe can be divided into a high-pressure pipe and a low-pressure pipe, therefore, the length of the connecting pipe in this embodiment can be the total length of the connecting pipe between the indoor unit and the outdoor unit.

It can be understood that the connecting pipe of the air conditioner can be a copper pipe or a pipe made of other materials, which is not limited in this embodiment. In this embodiment, take the connecting pipe as a copper pipe as an example to illustrate. The refrigeration principle of the air conditioner is: when the air conditioner is in working condition, the compressor of the outdoor unit compresses the refrigerant to convert the gaseous refrigerant into liquid refrigerant and releasing heat. The liquid refrigerant enters the condenser (radiator) of the outdoor unit, and a control fan removes the heat generated during compression to the outdoor environment, so that the liquid refrigerant is converted into a lower temperature liquid refrigerant. After coming out of the condenser (radiator), the liquid refrigerant passes through the relatively thin pipe (called a high-pressure pipe) connecting the indoor unit and the outdoor unit, then enters a throttle before a evaporator of the indoor unit, and enters a evaporator of the indoor unit after coming out of the throttle. The liquid refrigerant can vaporize quickly in the evaporator and absorb a large amount of heat around the evaporator. Since a large amount of heat around the evaporator of the indoor unit is absorbed by the refrigerant, relying on a fan in the indoor unit can blow cold air to the indoor space, thereby achieving a cooling effect. After coming out of the evaporator of the indoor unit, the refrigerant can pass through the relatively thick pipe (called a low-pressure pipe) connecting the indoor unit and the outdoor unit, and then enters the compressor of the outdoor unit again. By continuing the cycle over and over again in this way, the indoor cooling effect can be produced. The heating principle of an air conditioner is similar to the above-mentioned refrigeration principle and will not be described in detail here.

It can be seen from the operating principle of the air conditioner that during the cooling and heating processes of the air conditioner, the length of the low-pressure pipe and the high-pressure pipe have a certain impact on the operation of the air conditioner. Therefore, in the present application, in order to achieve better heating startup control effect, the connecting pipe length of the connecting pipe of the air conditioner can be considered and used as a consideration to control the compressor when determining the heating startup strategy, so as to control the compressor more reasonably and improve the service life of the compressor.

In a specific implementation, the drop height and the length of the connecting pipe can be determined through installation record information, for example, when the worker installs the air conditioner, all installation information can be recorded and entered into the system for subsequent air-conditioning control. When the controller of the air conditioner receives the heating startup command input by the user, it can obtain the installation record information corresponding to the air conditioner, determine the indoor unit information and outdoor unit information based on the installation record information, determine the height of the indoor unit based on the indoor unit information, and determine the height of the outdoor unit based on the outdoor unit information, subtract the height of the indoor unit from the height of the outdoor unit to determine the drop height between the indoor unit and the outdoor unit. For example, subtracting the height of the indoor unit from the height of the outdoor unit, or subtracting the height of the outdoor unit from the height of the indoor unit to obtain the height difference, and then use the absolute value of the height difference as the drop height.

It should be understood that when determining the height of the indoor unit and the height of the outdoor unit, the center point of the indoor unit and the outdoor unit can be used as the base point to determine the height, or the highest point or lowest point of the indoor unit and outdoor unit can be used as the base point to determine the height, and the height of the indoor unit and the height of the outdoor unit can also be determined by other methods, which are not limited in this embodiment.

In one embodiment, since the usage scenarios of each air conditioner are not necessarily the same, the connecting pipe length of the connecting pipe corresponding to the air conditioner can be calculated in advance, and treat the length of the connecting pipe as a type of connecting pipe information. The connecting pipe information can be determined based on the installation record information, and the length of the connecting pipe can be extracted from the connecting pipe information. In another embodiment, the length of the connecting pipe may not be calculated in advance, and the connecting pipe information may be determined based on the installation record information during the control process, extract the length of the high-pressure pipe and the length of the low-pressure pipe from the connecting pipe information, and add the length of the high-pressure pipe and the length of the low-pressure pipe to obtain the length of the connecting pipe. In addition to the above methods, the length of the connecting pipe can also be determined by other methods, which is not limited in this embodiment.

In a specific implementation, for example, when installing an air conditioner, the worker can determine the length of the high-pressure pipe corresponding to the high-pressure pipe of the air conditioner and the length of the low-pressure pipe corresponding to the low-pressure pipe, and add the length of the high-pressure pipe and the length of the low-pressure pipe, the parameter obtained by the addition is used as the connecting pipe length of the connecting pipe corresponding to the air conditioner, and the obtained connecting pipe length is used as a type of connecting pipe information. Meanwhile, after the air conditioner is installed, the worker can also detect the height of the indoor unit and the height of the outdoor unit corresponding to the indoor unit and the outdoor unit respectively, and use them as indoor unit information and outdoor unit information respectively, and store the obtained connecting pipe information, indoor unit information and outdoor unit information as air conditioner installation information in the data storage area corresponding to the air conditioner.

In another embodiment, after the air conditioner is installed, the worker can directly detect the height difference between the indoor unit and the outdoor unit, and use the height difference as the drop height, the drop height is used as one of the indoor unit information, and the drop height is used as one of the outdoor unit information at the same time. During the heating startup process, the indoor unit information and/or outdoor unit information in the air conditioner installation information is directly obtained, and the drop height is determined based on the indoor unit information and/or the outdoor unit information. The specific method used may be determined according to the actual usage scenario, which is not limited in this embodiment.

Step S20, determining a corresponding heating startup strategy according to the drop height and the length of the connecting pipe, and controlling an operating state of a compressor according to the heating startup strategy to complete an air-conditioning heating startup.

It should be understood that, in view of the situation that the heating startup mode of the traditional air conditioner is consistent under any conditions, this embodiment proposes a new method of selecting the heating startup mode based on the drop height and the length of the connecting pipe. After determining the drop height and the length of the connecting pipe, logical judgment can be made based on the drop height and the length of the connecting pipe to determine the heating startup strategy corresponding to the current usage scenario. Then, the compressor of the air conditioner can be controlled according to the determined heating startup strategy, and the operating state of the compressor can be adjusted to complete the heating startup of the air conditioner.

In this embodiment, the solution of this embodiment is different from the situation that the traditional air conditioner heating startup method is consistent under any conditions, during the heating startup process, the appropriate heating startup strategy is determined based on the drop height and the length of the connecting pipe to perform heating startup, which improves the low-pressure pressure when heating starts up and prolongs the service life of the compressor.

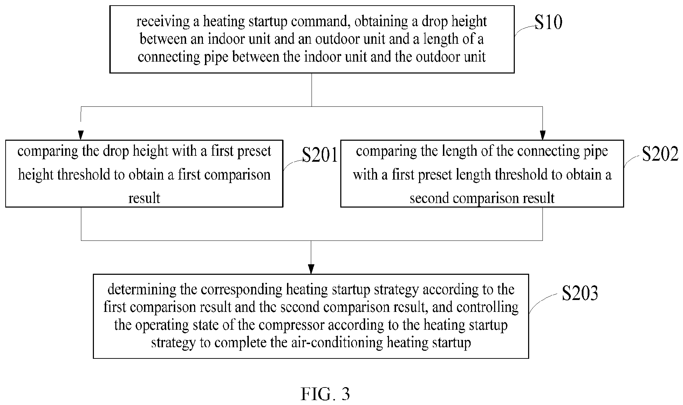

In one embodiment, as shown in FIG. 3, a second embodiment of the air-conditioning heating startup control method according to the present application is proposed based on the first embodiment, the step S20 includes:
step S201, comparing the drop height with a first preset height threshold to obtain a first comparison result.

It should be noted that the first preset height threshold *h₁* can be set in advance, wherein the first preset height threshold *h₁* can be set according to the specific model of the air conditioner and actual usage conditions, and this embodiment does not limit its specific value.

It should be understood that the drop height H can be compared with the first preset height threshold *h₁* to obtain the first comparison result. In this embodiment, the first comparison result may be H≥*h₁* or H< *h₁.*

Step S202, comparing the length of the connecting pipe with a first preset length threshold to obtain a second comparison result.

It should be noted that the first preset length threshold *l₁* can be set in advance, the first preset length threshold *l₁* can be set according to the specific model of the air conditioner and actual usage conditions, and this embodiment does not limit its specific value.

It should be understood that the length of the connecting pipe L can be compared with the first preset length threshold *l₁* to obtain the second comparison result. In this embodiment, the second comparison result may be L≥*l₁* or L< *l₁.*

Step S203, determining the corresponding heating startup strategy according to the first comparison result and the second comparison result, and controlling the operating state of the compressor according to the heating startup strategy to complete the air-conditioning heating startup.

It should be noted that the above two steps can be performed simultaneously, or step S201 may be performed first and then step S202, or step S202 may be performed first and then step S201, this embodiment does not limit this. In this embodiment, take an example of performing these two steps at the same time to illustrate.

It should be understood that after the first comparison result and the second comparison result are obtained through the above steps, the first comparison result and the second comparison result can be combined, and the heating startup strategy corresponding to the current usage scenario can be determined based on the two comparison results. Then, the compressor of the air conditioner is controlled and the operating state of the compressor is adjusted according to the determined heating startup strategy, thereby completing the heating startup of the air conditioner. Since there are multiple comparison results, in the case of obtaining different comparison results, different heating startup strategies corresponding to the current scenario can be determined, and the operating state of the compressor can be controlled through the most appropriate heating startup strategy to achieve better heating startup control effect.

In this embodiment, when the drop height and the length of the connecting pipe meet certain conditions, the compressor can be controlled in two stages through the preset speed, frequency and operating time, and then the compressor can be brought into a normal operating state, thereby completing the heating startup of the air conditioner, increasing the low-pressure pressure during heating startup and prolonging the service life of the compressor.

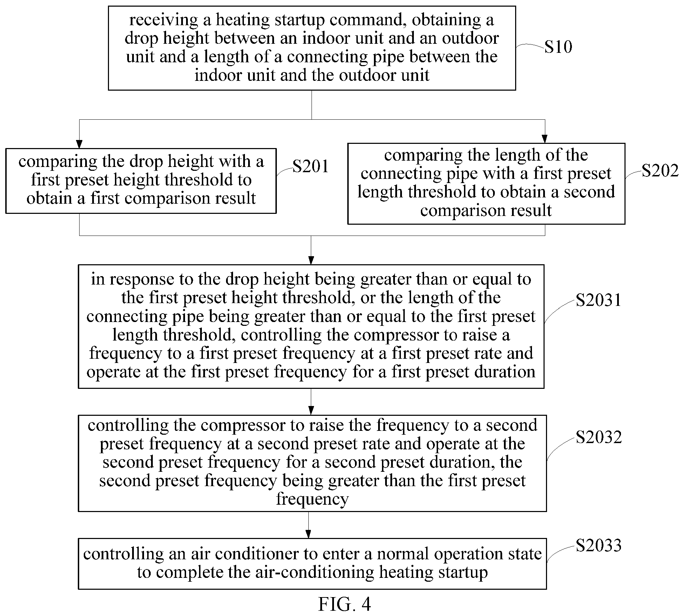

In one embodiment, as shown in FIG. 4, a third embodiment of the air-conditioning heating startup control method according to the present application is proposed based on the second embodiment, the step S203 includes:
step S2031, in response to the drop height being greater than or equal to the first preset height threshold, or the length of the connecting pipe being greater than or equal to the first preset length threshold, controlling the compressor to raise a frequency to a first preset frequency at a first preset rate and operate at the first preset frequency for a first preset duration.

It should be noted that the first preset rate *v₁*, the first preset frequency *f₁* and the first preset duration *t₁* may be set in advance, the first preset rate *v₁*, the first preset frequency *f₁* and the first preset duration *t₁* can be set according to the specific model of the air conditioner and actual usage conditions, and this embodiment does not limit its specific value.

It should be understood that, after the above comparison, when the drop height H is greater than or equal to the first preset height threshold *h₁*, or the connecting pipe length L is greater than or equal to the first preset length threshold *l₁*, that is, when the conditions of H≥*h₁* or L≥*l₁* is satisfied, the compressor can be controlled to raise a frequency to the first preset frequency *f₁* at the first preset rate *v₁* and operate at the first preset frequency *f₁* for the first preset duration *t₁.*

Step S2032, controlling the compressor to raise the frequency to a second preset frequency at a second preset rate and operate at the second preset frequency for a second preset duration, the second preset frequency being greater than the first preset frequency.

It should be noted that the second preset rate *v₂*, the second preset frequency *f₂* and the second preset duration *t₂* may be set in advance, the second preset rate *v₂*, the second preset frequency *f₂* and the second preset duration *t₂* can be set according to the specific model of the air conditioner and actual usage conditions, and this embodiment does not limit its specific value. Wherein the second preset frequency *f₂* is greater than the first preset frequency *f₁.*

It should be understood that after controlling the compressor to operate at the first preset frequency *f₁* for the first preset duration *t₁*, the compressor can be controlled to raise the frequency to the second preset frequency *f₂* at the second preset rate *v₂* and operate at the second preset frequency *f₂* for the second preset duration *t₂.*

Step S2033, controlling an air conditioner to enter a normal operation state to complete the air-conditioning heating startup.

It should be understood that after controlling the compressor to operate at the second preset frequency *f₂* for the second preset duration *t₂*, the compressor can be controlled to operate normally, so that the air conditioner enters a normal operating state, thereby completing the air-conditioning heating startup. The normal operating state of the air conditioner refers to the regular operating state of the air conditioner according to the mode and temperature set by the user. This embodiment is aimed at the process of starting up the air conditioner, improving the process of starting up, after the air conditioner is started up, just control the air conditioner to operate normally.

It can be understood that the control of the compressor in this embodiment is divided into two stages, which can be called the first stage and the second stage. In the first stage, the compressor is controlled to raise the frequency through the first preset rate, and when the frequency of the compressor reaches the first preset frequency, the compressor is controlled to maintain the first preset frequency and continue to operate for the first preset duration. After continuing for the first preset duration, entering the second stage. In the second stage, the compressor is controlled to raise the frequency through the second preset rate, and when the frequency of the compressor reaches the second preset frequency, the compressor is controlled to maintain the second preset frequency and continue to operate for the second preset duration. After continuing for the second preset duration, the compressor can be controlled to operate normally, so that the air conditioner enters a normal operating state, thereby completing the air-conditioning heating startup.

In another embodiment, since there are other comparison results, in the usage scenarios corresponding to the other comparison results, in order to improve the air-conditioning heating startup control effect, other heating startup strategies can also be selected. The step S203 may also include:
in response to the drop height being less than the first preset height threshold, and the length of the connecting pipe being less than the first preset length threshold, obtaining an outdoor ambient temperature; when the drop height is greater than a second preset height threshold, or the length of the connecting pipe is greater than a second preset length threshold, and the outdoor ambient temperature is lower than a first preset temperature threshold, controlling the compressor to raise a frequency to a first preset frequency at a first preset rate and operate at the first preset frequency for a first preset duration, the second preset height threshold is less than the first preset height threshold, and the second preset length threshold is less than the first preset length threshold; controlling the compressor to raise the frequency to a second preset frequency at a second preset rate and operate at the second preset frequency for a second preset duration; controlling an air conditioner to enter a normal operation state to complete the air-conditioning heating startup.

It should be understood that when the air conditioner is heating, the lower the outdoor ambient temperature, the lower the low pressure when starting up, which affects the service life of the compressor, and the existing control method does not consider the impact of low temperature environment. In the solution of this embodiment, when the drop height H is less than the first preset height threshold *h₁* and the length of the connecting pipe L is less than the first preset length threshold *l₁,* that is, in the case of H< *h₁* and L< *l₁* are satisfied, the outdoor ambient temperature T can be obtained, based on the combination of drop height and the length of the connecting pipe, then combine the outdoor ambient temperature to choose the appropriate heating startup strategy. The outdoor ambient temperature may be detected through a temperature sensor, the outdoor ambient temperature also may be obtained through a network, or the outdoor ambient temperature may be determined through other methods, which is not limited in this embodiment.

It should be noted that the second height threshold *h₂,* the second length threshold *l₂* and the first preset temperature threshold *T₁* and the second preset temperature threshold *T₂* may be set in advance. The second height threshold *h₂*, the second length threshold *l₂* and the first preset temperature threshold *T₁* and the second preset temperature threshold *T₂* can be set according to the specific model of the air conditioner and actual usage conditions, and this embodiment does not limit its specific value. The second height threshold *h₂* is less than the first height threshold *h₁*, the second length threshold *l₂* is less than the first length threshold *h₁*, and the second preset temperature threshold *T₂* is less than the first temperature threshold *T₁.*

It should be understood that the drop height can be further compared with the second preset height threshold, the length of the connecting pipe can be compared with the second preset length threshold, and the outdoor ambient temperature can be compared with the first preset temperature threshold. After obtaining an outdoor ambient temperature, the method further includes:
in response to the drop height being less than or equal to the second preset height threshold, and the length of the connecting pipe is less than or equal to the second preset length threshold, comparing the outdoor ambient temperature with a second preset temperature threshold, and the second preset temperature threshold is less than the first preset temperature threshold; when the outdoor ambient temperature is less than the second preset temperature threshold, controlling the compressor to raise the frequency to the first preset frequency at the first preset rate and operate at the first preset frequency for the first preset duration; controlling the compressor to raise the frequency to the second preset frequency at the second preset rate and operate at the second preset frequency for the second preset duration; and controlling the air conditioner to enter the normal operation state to complete the air-conditioning heating startup.

It should be understood that when the conditions of *h₂*<H<*h₁* or *l₂*<L<*l₁* and T< *T₁* are satisfied, the compressor can be controlled to raise the frequency to the first preset frequency *f₁* at the first preset rate *v₁* and operate at the first preset frequency *f₁* for the first preset duration *t₁*, and control the compressor to raise the frequency to the second preset frequency *f₂* at the second preset rate *v₂* and operate at the second preset frequency *f₂* for the second preset duration *t₂*, and then control the compressor to operate normally, so that the air conditioner enters the normal operating state.

In another embodiment, in the case of that the above conditions are not satisfied, judgment can be continued, after comparing the outdoor ambient temperature with the second preset temperature threshold, the method further includes:
in response to the drop height being less than or equal to the second preset height threshold, and the length of the connecting pipe is less than or equal to the second preset length threshold, comparing the outdoor ambient temperature with a second preset temperature threshold, and the second preset temperature threshold is less than the first preset temperature threshold; when the outdoor ambient temperature is less than the second preset temperature threshold, controlling the compressor to raise the frequency to the first preset frequency at the first preset rate and operate at the first preset frequency for the first preset duration; controlling the compressor to raise the frequency to the second preset frequency at the second preset rate and operate at the second preset frequency for the second preset duration; and controlling the air conditioner to enter the normal operation state to complete the air-conditioning heating startup.

It should be understood that when H ≤ *h₂* and L ≤ *l₂*, the outdoor ambient temperature can be compared with the second preset temperature threshold, when the condition of T< *T₂* is satisfied, the compressor can be controlled to raise the frequency to the first preset frequency *f₁* at the first preset rate *v₁* and operate at the first preset frequency *f₁* for the first preset duration *t₁*, and control the compressor to raise the frequency to the second preset frequency *f₂* at the second preset rate *v₂* and operate at the second preset frequency *f₂* for the second preset duration *t₂*, and then control the compressor to operate normally, so that the air conditioner enters the normal operating state.

It should be noted that the third preset rate *vₐ*, the third preset frequency *fₐ*, the fourth preset rate *v_{b}*, the fourth preset frequency *f_{b}*, the third preset duration *tₐ* and the fourth preset duration *t_{b}* can be set in advance. The third preset rate *vₐ*, the third preset frequency *fₐ*, the fourth preset rate *v_{b}*, the third preset duration *tₐ* and the fourth preset duration *t_{b}* can be set according to the specific model of the air conditioner and actual usage conditions, and this embodiment does not limit its specific value. The third preset rate *vₐ* is greater than the first preset rate *v₁*, the third preset frequency *fₐ* is greater than the first preset frequency *f₁*, the third preset duration *tₐ* is less than the first preset duration *t₁*, the fourth preset rate *v_{b}* is greater than the second preset rate *v₂*, the fourth preset frequency *f_{b}* is greater than the second preset frequency *f₂*, the fourth preset frequency *f_{b}* is greater than the third preset frequency *fₐ,* and the fourth preset duration *t_{b}* is less than the second preset duration *t₂*.

In another embodiment, after comparing the outdoor ambient temperature with a second preset temperature threshold, the method further includes:
in response to the outdoor ambient temperature being greater than or equal to the second preset temperature threshold, controlling the compressor to raise the frequency to a third preset frequency at a third preset rate and operate at the third preset frequency for a third preset duration, the third preset rate is greater than the first preset rate, the third preset frequency is greater than the first preset frequency, and the third preset duration is less than the first preset duration; controlling the compressor to raise the frequency to a fourth preset frequency at a fourth preset rate and operate at the fourth preset frequency for a fourth preset duration, the fourth preset rate is greater than the second preset rate, the fourth preset frequency is greater than the second preset frequency, the fourth preset frequency is greater than the third preset frequency, and the fourth preset duration is less than the second preset duration; and controlling the air conditioner to enter the normal operation state to complete the air-conditioning heating startup.

It should be understood that in the case of the above conditions are still not satisfied, that is, when the outdoor ambient temperature T is greater than or equal to the second preset temperature threshold *T₂,* the compressor can be controlled to raise the frequency to the third preset frequency *fₐ* at the third preset rate *vₐ* and operate at the third preset frequency *fₐ* for the third preset duration *tₐ,* and control the compressor to raise the frequency to the fourth preset frequency *f_{b}* at the fourth preset rate *v_{b}* and operate at the fourth preset frequency *f_{b}* for the fourth preset duration *t_{b}*, and then control the compressor to operate normally, so that the air conditioner enters the normal operating state.

It can be understood that the control of the compressor in this embodiment is divided into two stages, which can be called the first stage and the second stage. In the first stage, the compressor is controlled to raise the frequency through the third preset rate, and when the frequency of the compressor reaches the third preset frequency, the compressor is controlled to maintain the third preset frequency and continue to operate for the third preset duration. After continuing for the third preset duration, entering the second stage. In the second stage, the compressor is controlled to raise the frequency through the fourth preset rate, and when the frequency of the compressor reaches the fourth preset frequency, the compressor is controlled to maintain the fourth preset frequency and continue to operate for the fourth preset duration. After continuing for the fourth preset duration, the compressor can be controlled to operate normally, so that the air conditioner enters a normal operating state, thereby completing the air-conditioning heating startup.

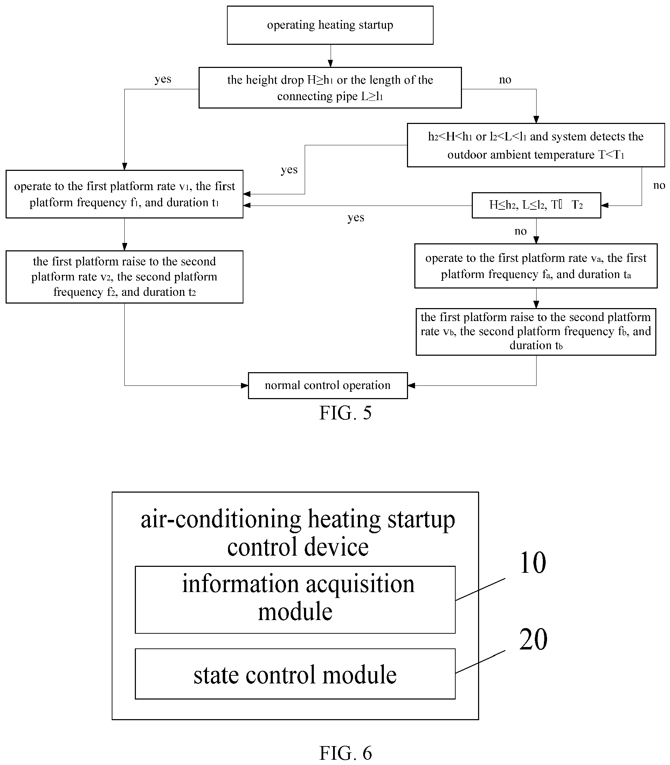

In a specific implementation, the logic control view of the embodiment can be as shown in FIG. 5. When heating is started up, judge the condition of the height drop H≥*h₁* or the length of the connecting pipe L≥*l₁*, if satisfied, the compressor will raise the frequency to the first platform at *v₁* rate and operate at *f₁* frequency value for *t₁* time on the first platform, and then raise the frequency to the second platform at *v₂* rate and operate at *f₂* frequency value for *t₂* time on the second platform, and finally operate normally. If it is not satisfied, then judge the condition of *h₂*<H< *h₁* or *l₂*<L< *l₁* and system detects the outdoor ambient temperature T< *T₁,* if they are determined to be satisfied, the compressor will raise the frequency to the first platform at *v₁* rate and operate at *f₁* frequency value for *t₁* time on the first platform, and then raise the frequency to the second platform at *v₂* rate and operate at *f₂* frequency value for *t₂* time on the second platform, and finally operate normally; if they are determined to be not satisfied again, then judge the condition of T<*T₂* eventually, if satisfied, the compressor will raise the frequency to the first platform at *v₁* rate and operate at *f₁* frequency value for *t₁* time on the first platform, and then raise the frequency to the second platform at *v₂* rate and operate at *f₂* frequency value for *t₂* time on the second platform, and finally operate normally; if it is determined to be not satisfied yet, the compressor will raise the frequency to the first platform at *vₐ* rate and operate at *fₐ* frequency value for *tₐ* time on the first platform, and then raise the frequency to the second platform at *v_{b}* rate and operate at *f_{b}* frequency value for *t_{b}* time on the second platform, and finally operate normally. Wherein the numerical relationship of each value is *h₂*<*h₁*, *l₂*<*l₁*, *T₂*<*T₁*, *v₁*<*vₐ*,*f₁*<*fₐ*, *t₁*>*tₐ*,*f₁*<*f₂*, *v₂*<*v_{b}*,*f₂*<*f_{b}*, *t₂*>*t_{b}* and *fₐ*<*f_{b}*.

In this embodiment, under certain conditions, the outdoor ambient temperature can also be combined with the drop height and the length of the connecting pipe to select an appropriate heating startup strategy to control the compressor, so that the air conditioner can achieve better heating startup effect in different usage scenarios, thereby avoiding possible interference, increasing the low-pressure pressure when heating starts up, prolonging the service life of the compressor, and improving the user experience.

In addition, an embodiment according to the present application also proposes a storage medium, the storage medium stores an air-conditioning heating startup control program, the steps of the air-conditioning heating startup control method as described above are implemented when the air-conditioning heating startup control program is executed by a processor.

Since the storage medium adopts all the technical solutions of all the above embodiments, it has at least all the functions brought by the technical solutions of the above embodiments, which will not be described in detail here.

In addition, referring to FIG. 6, the present application also proposes an air-conditioning heating startup control device, including an information acquisition module 10 and a state control module 20.

The information acquisition module 10 is configured to when receiving a heating startup command, obtaining a drop height between an indoor unit and an outdoor unit and a length of a connecting pipe between the indoor unit and the outdoor unit.

It should be understood that the air conditioner in the embodiment may specifically be an inverter air conditioner, and the compressor may specifically be an inverter compressor, and this embodiment does not limit the specific models of the inverter air conditioner and the inverter compressor. The heating startup command in this embodiment can be input by the user through the buttons on the remote control of the air conditioner, can also be input by the user through voice, or can be input by other methods, which is not limited in this embodiment.

It should be noted that the air conditioner includes an indoor unit and an outdoor unit, the indoor unit is installed indoors, and the outdoor unit is installed outdoors. Generally speaking, for the normal operation of the air conditioner, there will be a certain height difference between the installation position of the indoor unit and the installation position of the outdoor unit.

It should be understood that the drop height in the embodiment refers to the vertical height difference between the indoor unit and the outdoor unit of the air conditioner. Since the indoor unit and the outdoor unit of the air conditioner can be connected through the connecting pipe, the refrigerant flows between the indoor unit and the outdoor unit through the connecting pipe to form a refrigeration cycle or a heating cycle to achieve a cooling or heating effect. Moreover, the connecting pipe can be divided into a high-pressure pipe and a low-pressure pipe, therefore, the length of the connecting pipe in this embodiment can be the total length of the connecting pipe between the indoor unit and the outdoor unit.

It can be understood that the connecting pipe of the air conditioner can be a copper pipe or a pipe made of other materials, which is not limited in this embodiment. In this embodiment, take the connecting pipe as a copper pipe as an example to illustrate. The refrigeration principle of the air conditioner is: when the air conditioner is in working condition, the compressor of the outdoor unit compresses the refrigerant to convert the gaseous refrigerant into liquid refrigerant and releasing heat. The liquid refrigerant enters the condenser (radiator) of the outdoor unit, and a control fan removes the heat generated during compression to the outdoor environment, so that the liquid refrigerant is converted into a lower temperature liquid refrigerant. After coming out of the condenser (radiator), the liquid refrigerant passes through the relatively thin pipe (called a high-pressure pipe) connecting the indoor unit and the outdoor unit, then enters a throttle before a evaporator of the indoor unit, and enters a evaporator of the indoor unit after coming out of the throttle. The liquid refrigerant can vaporize quickly in the evaporator and absorb a large amount of heat around the evaporator. Since a large amount of heat around the evaporator of the indoor unit is absorbed by the refrigerant, relying on a fan in the indoor unit can blow cold air to the indoor space, thereby achieving a cooling effect. After coming out of the evaporator of the indoor unit, the refrigerant can pass through the relatively thick pipe (called a low-pressure pipe) connecting the indoor unit and the outdoor unit, and then enters the compressor of the outdoor unit again. By continuing the cycle over and over again in this way, the indoor cooling effect can be produced. The heating principle of an air conditioner is similar to the above-mentioned refrigeration principle and will not be described in detail here.

It can be seen from the operating principle of the air conditioner that during the cooling processes and heating processes of the air conditioner, the length of the low-pressure pipe and the length of the high-pressure pipe have a certain impact on the operation of the air conditioner. Therefore, in the present application, in order to achieve a better heating startup control effect, the connecting pipe length of the connecting pipe of the air conditioner can be considered and used as a consideration to control the compressor when determining the heating startup strategy, so as to control the compressor more reasonably and improve the service life of the compressor.

In a specific implementation, the drop height and the length of the connecting pipe can be determined through installation record information, for example, when the worker installs the air conditioner, all installation information can be recorded and entered into the system for subsequent air-conditioning control. When the controller of the air conditioner receives the heating startup command input by the user, it can obtain the installation record information corresponding to the air conditioner, determine the indoor unit information and outdoor unit information based on the installation record information, determine the height of the indoor unit based on the indoor unit information, and determine the height of the outdoor unit based on the outdoor unit information, subtract the height of the indoor unit from the height of the outdoor unit to determine the drop height between the indoor unit and the outdoor unit. For example, subtracting the height of the indoor unit from the height of the outdoor unit, or subtracting the height of the outdoor unit from the height of the indoor unit to obtain the height difference, and then use the absolute value of the height difference as the drop height.

It should be understood that when determining the height of the indoor unit and the height of the outdoor unit, the center point of the indoor unit and the outdoor unit can be used as the base point to determine the height, or the highest point or lowest point of the indoor unit and outdoor unit can be used as the base point to determine the height, and the height of the indoor unit and the height of the outdoor unit can also be determined by other methods, which are not limited in this embodiment.

In one embodiment, since the usage scenarios of each air conditioner are not necessarily the same, the connecting pipe length of the connecting pipe corresponding to the air conditioner can be calculated in advance, and the length of the connecting pipe treated as a type of connecting pipe information. The connecting pipe information can be determined based on the installation record information, and the length of the connecting pipe can be extracted from the connecting pipe information. In another embodiment, the length of the connecting pipe may not be calculated in advance, and the connecting pipe information may be determined based on the installation record information during the control process, extract the length of the high-pressure pipe and the length of the low-pressure pipe from the connecting pipe information, and add the length of the high-pressure pipe and the length of the low-pressure pipe to obtain the length of the connecting pipe. In addition to the above methods, the length of the connecting pipe can also be determined by other methods, which is not limited in this embodiment.

In a specific implementation, for example, when installing an air conditioner, the worker can determine the length of the high-pressure pipe corresponding to the high-pressure pipe of the air conditioner and the length of the low-pressure pipe corresponding to the low-pressure pipe, and add the length of the high-pressure pipe and the length of the low-pressure pipe, the parameter obtained by the addition is used as the connecting pipe length of the connecting pipe corresponding to the air conditioner, and the obtained connecting pipe length is used as a type of connecting pipe information. Meanwhile, after the air conditioner is installed, the worker can also detect the height of the indoor unit and the height of the outdoor unit corresponding to the indoor unit and the outdoor unit respectively, and use them as indoor unit information and outdoor unit information respectively, and store the obtained connecting pipe information, indoor unit information and outdoor unit information as air conditioner installation information in the data storage area corresponding to the air conditioner.

In another embodiment, after the air conditioner is installed, the worker can directly detect the height difference between the indoor unit and the outdoor unit, and use the height difference as the drop height, the drop height is used as one of the indoor unit information, and the drop height is used as one of the outdoor unit information at the same time. During the heating startup process, the indoor unit information and/or outdoor unit information in the air conditioner installation information is directly obtained, and the drop height is determined based on the indoor unit information and/or the outdoor unit information. The specific method used may be determined according to the actual usage scenario, which is not limited in this embodiment.

The state control module 20 is configured to determine a corresponding heating startup strategy according to the drop height and the length of the connecting pipe and control an operating state of a compressor according to the heating startup strategy to complete an air-conditioning heating startup.

It should be understood that, in view of the situation that the heating startup mode of the traditional air conditioner is consistent under any conditions, this embodiment proposes a new method of selecting the heating startup mode based on the drop height and the length of the connecting pipe. After determining the drop height and the length of the connecting pipe, logical judgment can be made based on the drop height and the length of the connecting pipe to determine the corresponding heating startup strategy. Then, the compressor of the air conditioner can be controlled according to the determined heating startup strategy, and the operating state of the compressor can be adjusted to complete the heating startup of the air conditioner.

In this embodiment, the solution of this embodiment is different from the situation that the traditional air conditioner heating startup method is consistent under any conditions, during the heating startup process, the appropriate heating startup strategy is determined based on the drop height and the length of the connecting pipe to perform heating startup, which improves the low-pressure pressure when heating starts up and prolongs the service life of the compressor.

For other embodiments or specific implementation methods of the air-conditioning heating startup control device according to the present application, reference may be made to each of the above method embodiments, which will not be described in detail again here.

It should be noted that, as used herein, the terms "comprise", "include" or any other variations thereof are intended to cover a non-exclusive inclusion, such that a process, method, article or device that includes a list of elements includes not only those elements, but also other elements not expressly listed or elements inherent to such a process, method, article or device. Without further limitation, an element defined by the statement "comprises a/an ......" does not exclude the existence of other identical elements in the process, method, article or device including this element.

The above serial numbers of the embodiments according to the present application are only for description and do not represent the advantages or disadvantages of the embodiments.

Through the above description of the embodiments, those skilled in the art can clearly understand that the methods of the above embodiments can be implemented by means of software plus the necessary general hardware platform, it can also be implemented by hardware certainly, but in many cases the former is a better implementation. Based on this understanding, the technical solution of the present application is essentially or the part that contributes to the existing technology can be embodied in the form of software products. The computer software product is stored in a computer-readable storage medium (such as ROM/RAM, magnetic disk and CD) as described above, and includes several instructions to cause an intelligent device (which can be a mobile phone, a computer, an air conditioner, or a network air conditioner, etc.) to execute the methods described in various embodiments according to the present application.

The above are only optional embodiments of the present application, and do not intended to limit the patent scope of the present application, any equivalent structure or equivalent process transformation made using the contents of the description and drawings of the present application, or used directly or indirectly in other related technical fields, are all equally included in the scope of the present application.

## Claims

1. An air-conditioning heating startup control method, **characterized by** comprising:
receiving a heating startup command, obtaining a drop height between an indoor unit and an outdoor unit and a length of a connecting pipe between the indoor unit and the outdoor unit; and
determining a corresponding heating startup strategy according to the drop height and the length of the connecting pipe, and controlling an operating state of a compressor according to the heating startup strategy to complete an air-conditioning heating startup.

2. The air-conditioning heating startup control method according to claim 1, wherein the determining the corresponding heating startup strategy according to the drop height and the length of the connecting pipe, and controlling the operating state of the compressor according to the heating startup strategy to complete the air-conditioning heating startup comprises:
comparing the drop height with a first preset height threshold to obtain a first comparison result;
comparing the length of the connecting pipe with a first preset length threshold to obtain a second comparison result; and
determining the corresponding heating startup strategy according to the first comparison result and the second comparison result, and controlling the operating state of the compressor according to the heating startup strategy to complete the air-conditioning heating startup.

3. The air-conditioning heating startup control method according to claim 2, wherein the determining the corresponding heating startup strategy according to the first comparison result and the second comparison result, and controlling the operating state of the compressor according to the heating startup strategy to complete the air-conditioning heating startup comprises:
in response to the drop height being greater than or equal to the first preset height threshold, or the length of the connecting pipe being greater than or equal to the first preset length threshold, controlling the compressor to raise a frequency to a first preset frequency at a first preset rate and operate at the first preset frequency for a first preset duration;
controlling the compressor to raise the frequency to a second preset frequency at a second preset rate and operate at the second preset frequency for a second preset duration, the second preset frequency being greater than the first preset frequency; and
controlling an air conditioner to enter a normal operation state to complete the air-conditioning heating startup.

4. The air-conditioning heating startup control method according to claim 2, wherein the determining the corresponding heating startup strategy according to the first comparison result and the second comparison result, and controlling the operating state of the compressor according to the heating startup strategy to complete the air-conditioning heating startup comprises:
in response to the drop height being less than the first preset height threshold, and the length of the connecting pipe being less than the first preset length threshold, obtaining an outdoor ambient temperature;
in response to the drop height being greater than a second preset height threshold, or the length of the connecting pipe being greater than a second preset length threshold, and the outdoor ambient temperature being lower than a first preset temperature threshold, controlling the compressor to raise a frequency to a first preset frequency at a first preset rate and operate at the first preset frequency for a first preset duration, wherein the second preset height threshold is less than the first preset height threshold, and the second preset length threshold is less than the first preset length threshold;
controlling the compressor to raise the frequency to a second preset frequency at a second preset rate and operate at the second preset frequency for a second preset duration; and
controlling an air conditioner to enter a normal operation state to complete the air-conditioning heating startup.

5. The air-conditioning heating startup control method according to claim 4, wherein after the obtaining the outdoor ambient temperature, the method further comprises:
in response to the drop height being less than or equal to the second preset height threshold, and the length of the connecting pipe being less than or equal to the second preset length threshold, comparing the outdoor ambient temperature with a second preset temperature threshold, the second preset temperature threshold being less than the first preset temperature threshold;
in response to the outdoor ambient temperature being less than the second preset temperature threshold, controlling the compressor to raise the frequency to the first preset frequency at the first preset rate and operate at the first preset frequency for the first preset duration;
controlling the compressor to raise the frequency to the second preset frequency at the second preset rate and operate at the second preset frequency for the second preset duration; and
controlling the air conditioner to enter the normal operation state to complete the air-conditioning heating startup.

6. The air-conditioning heating startup control method according to claim 5, wherein after the comparing the outdoor ambient temperature with the second preset temperature threshold, the method further comprises:
In response to the outdoor ambient temperature being greater than or equal to the second preset temperature threshold, controlling the compressor to raise the frequency to a third preset frequency at a third preset rate and operate at the third preset frequency for a third preset duration, wherein the third preset rate is greater than the first preset rate, the third preset frequency is greater than the first preset frequency, and the third preset duration is less than the first preset duration;
controlling the compressor to raise the frequency to a fourth preset frequency at a fourth preset rate and operate at the fourth preset frequency for a fourth preset duration, wherein the fourth preset rate is greater than the second preset rate, the fourth preset frequency is greater than the second preset frequency, the fourth preset frequency is greater than the third preset frequency, and the fourth preset duration is less than the second preset duration; and
controlling the air conditioner to enter the normal operation state to complete the air-conditioning heating startup.

7. The air-conditioning heating startup control method according to any one of claims 1 to 6, wherein the receiving the heating startup command, obtaining the drop height between the indoor unit and the outdoor unit and the length of the connecting pipe between the indoor unit and the outdoor unit comprises:
receiving the heating startup command, obtaining installation record information of an air conditioner;
extracting indoor unit information, outdoor unit information and connection pipe information from the installation record information; and
determining the drop height between the indoor unit and the outdoor unit according to the indoor unit information and the outdoor unit information, and determining the length of the connecting pipe between the indoor unit and the outdoor unit according to the connecting pipe information.

8. An air-conditioning heating startup control device, **characterized by** comprising:
an information acquisition module configured to receive a heating startup command, obtain a drop height between an indoor unit and an outdoor unit and a length of a connecting pipe between the indoor unit and the outdoor unit; and
a state control module configured to determine a corresponding heating startup strategy according to the drop height and the length of the connecting pipe and control an operating state of a compressor according to the heating startup strategy to complete an air-conditioning heating startup.

9. An air conditioner, **characterized by** comprising: a memory, a processor, and an air-conditioning heating startup control program stored in the memory and executable on the processor, the air-conditioning heating startup control method according to any one of claims 1 to 7 is implemented when the air-conditioning heating startup control program is executed by the processor.

10. A storage medium, **characterized in that**, the storage medium stores an air-conditioning heating startup control program, the air-conditioning heating startup control method according to any one of claims 1 to 7 is implemented when the air-conditioning heating startup control program is executed by a processor.
